# EUROPÄISCHE PATENTSCHRIFT

(11) **EP 3 645 969 B1**
(45) Veröffentlichungstag und Bekanntmachung des Hinweises auf die Patenterteilung: **26.05.2021**
(21) Anmeldenummer: 18733237.4
(22) Anmeldetag: 20.06.2018
(51) Int. Cl.: G01C 21/00, G06T 7/55, G06T 7/70, G06T 17/05, G01C 21/32, G06K 9/00

(54) **VERFAHREN UND EINRICHTUNG ZUR ERZEUGUNG VON DIGITALEN KARTENMODELLEN**
METHOD AND DEVICE FOR GENERATING DIGITAL MAP MODELS
PROCÉDÉ ET DISPOSITIF DE PRODUCTION DE MODÈLES DE CARTE NUMÉRIQUES

(30) Priorität: 27.06.2017 DE 102017210798
(43) Veröffentlichungstag der Anmeldung: 06.05.2020
(73) Patentinhaber: Continental Automotive GmbH, 30165 Hannover (DE)
(72) Erfinder: HAMER, Henning, 81543 München (DE)
(74) Vertreter: Continental Corporation
(86) Internationale Anmeldenummer: PCT/EP2018/066400
(87) Internationale Veröffentlichungsnummer: WO 2019/002043

(56) Entgegenhaltungen:
- US-A1- 2016 012 633

## Beschreibung

### TECHNISCHES GEBIET

Die Erfindung betrifft die Erzeugung von digitalen Kartenmodellen aus von Fahrzeugen erfassten Daten. Die Erfindung betrifft insbesondere die Erzeugung von digitalen Straßenmodellen aus von Fahrzeugen erfassten Daten.

### TECHNISCHER HINTERGRUND

Digitale Karten und Straßenmodelle sind für viele Einsatzzwecke im Bereich Mobilität erforderlich, zum Beispiel für Navigationssysteme, Fahrerunterstützungssysteme, autonom fahrende Fahrzeuge. Insbesondere für Fahrerunterstützungssysteme und autonom fahrende Fahrzeuge ist eine allgemein hohe Genauigkeit und eine möglichst große Anzahl markanter Merkmale auf oder entlang der Straße in der digitalen Karte nötig, um eine im Vergleich zu bekannten Positionierungsverfahren wie Satellitennavigation oder Koppelverfahren genauere Positionsbestimmung zu ermöglichen.

Anbieter von digitalen Straßenmodellen lassen für die Erfassung und Aktualisierung der den Straßenmodellen zugrunde liegenden Daten spezielle, mit einer Reihe unterschiedlicher Sensoren ausgestatteter Fahrzeuge über die Straßen fahren. Da die Anzahl der für diese Zwecke eingesetzten Fahrzeuge klein ist, kann eine Aktualisierung der Straßendaten eine längere Zeit benötigen. Außerdem sind die Positionsdaten der Fahrzeuge wegen der Ungenauigkeit der Positionierungssensoren häufig ungenau, so dass sich insgesamt ein ungenaues digitales Straßenmodell ergibt.

Andererseits ist es möglich, digitale Straßenmodelle in einem Backend zu erzeugen, die aus einer Vielzahl von Abschnitten bestehen, wobei jeder Abschnitt ein digitales Teilmodell darstellt. Ein solches digitales Teilmodell kann von einem Fahrzeug aus Kameraaufnahmen erzeugt werden, welche das Fahrzeug beim Fahren entlang der Straße aufnimmt. Ein solches digitales Teilmodell wird vom Fahrzeug an das Backend hochgeladen. Die Erzeugung des digitalen Straßenmodells im Backend erfordert ein Zusammenfügen von Abschnitten bzw. Teilmodellen, die von einer Vielzahl von Fahrzeugen erzeugt wurden, in Bereichen, wo sich diese überlappen.

Das Dokument US2016012633 A1 offenbart die Erzeugung eines dreidimensionalen Modells basierend auf einer Vielzahl von Tiefenkarten.

### OFFENBARUNG DER ERFINDUNG

Es ist daher Aufgabe der Erfindung ein Verfahren, eine Einrichtung und ein System zur Erzeugung eines digitalen Kartenmodells anzugeben, die zuverlässig sind und sicher arbeiten.

Diese Aufgabe wird mit einem Verfahren gemäß dem unabhängigen Verfahrensanspruch, einer Vorrichtung gemäß dem unabhängigen Vorrichtungsanspruch und einem System gemäß dem unabhängigen Systemanspruch gelöst. Die abhängigen Ansprüche betreffen besondere Ausgestaltungen.

Die Erfindung betrifft ein Verfahren zur Erzeugung und/oder Aktualisierung eines aus von unterschiedlichen Quellen stammenden Abschnitten zusammengesetzten digitalen Modells zumindest eines Teilbereichs einer digitalen Karte gemäß Anspruch 1. Es werden einen ersten Abschnitt betreffende erste Daten mit zumindest durch ihre räumliche Position gekennzeichneten Objekten und/oder Merkmalspunkten bereitgestellt, die in eine Vielzahl von Detailgrade klassifizierbar sind. Es werden sodann einen zweiten Abschnitt betreffende zweite Daten mit zumindest durch ihre räumliche Position gekennzeichneten Objekten und/oder Merkmalspunkten bereitgestellt, die in die Vielzahl von Detailgraden klassifizierbar sind. Der erste Abschnitt und der zweite Abschnitte überlappen sich teilweise. Der erste Abschnitt betrifft ein digitales Teilmodell und kann in einem Fahrzeug aus einer Vielzahl von Kamerabildern erzeugt worden sein, die bei Befahren einer Straße von dem Fahrzeug aufgenommen wurden. Der zweite Abschnitt betrifft ein digitales Teilmodell und kann von einem anderen oder demselben Fahrzeug aus einer Vielzahl von Kamerabildern erzeugt worden sein, die bei Befahren einer Straße von dem anderen oder demselben Fahrzeug aufgenommen wurden. Die Objekte der Abschnitte des digitalen Modells betreffen insbesondere Objekte wie Straßenschilder, Fahrbahnmarkierungen, Ampeln. Die Merkmalspunkte (feature points) betreffen bspw. herausstechende Landmarken. Es werden Korrespondenzen zwischen den Objekten und/oder Merkmalspunkten des ersten Abschnitts und des zweiten Abschnitts bestimmt. Korrespondierende Objekte und/oder Merkmalspunkte sind mithin in beiden Abschnitten vorhanden.

Die Detailgrade der Objekte bzw. Merkmalspunkte betreffen eine Klassifikation dieser in verschiedene Auflösungsstufen des digitalen Modells. Ein Detailgrad kann insbesondere einer Objektklasse zugeordnet werden. Bspw. kann ein erster (niedriger) Detailgrad die Objekte der Straßenausstattung, insbesondere Verkehrsschilder und Straßenlaternen umfassen. Ein zweiter (mittlerer) Detailgrad kann Straßenmerkmale, insbesondere Striche von Straßenmarkierungen umfassen. Ein dritter (hoher) Detailgrad kann 2D/3D Merkmalspunkte (feature points), die durch ihre Position und einen visuellen Deskriptor beschreibbar sind, umfassen.

Das Verfahren, welches vorzugsweise in einem Backend implementiert ist, beinhaltet, in einem oder mehreren Prozessoren, das Ausrichten des ersten Abschnitts und des zweiten Abschnitts zueinander durch Minimieren eines Zielfunktionals, welches einen gewichteten Fehlerterm für jeden Detailgrad der Vielzahl von Detailgraden aufweist, wobei jeder Fehlerterm eine gewichtete Abweichung zwischen den Objekten und/oder Merkmalspunkten des ersten Abschnitts und den korrespondieren Objekten und/oder Merkmalspunkten des zweiten Abschnitts beschreibt. Das bedeutet, das Zielfunktional weist für jeden Detailgrad einen eigenen gewichteten Fehlerterm auf, der die Abweichung zwischen den korrespondierenden Merkmalen für genau diesen Detailgrad wiedergibt. Das Ausrichten kann zumindest durch Rotation und Translation der Abschnitte zueinander erfolgen.

Im Rahmen der Minimierung können lokale gradientenbasierte Optimierungsverfahren zum Einsatz können. Problematisch hierbei ist, wenn es sich um ein multimodales Optimierungsproblem handelt, d.h. wenn das Zielfunktional mehrere lokale Minima aufweist, da ein lokales gradientenbasiertes Verfahren in Abhängigkeit der Ausgangslösung in einem lokalem Minimum festhängen kann und somit das globale Minimum nicht mehr erreicht wird. Das globale Minimum entspricht der optimalen Ausrichtung der Abschnitte zueinander.

Dadurch, dass das Zielfunktional einen eigenen gewichteten Fehlerterm für jeden Detailgrad enthält, ist es möglich, durch eine entsprechende Steuerung der Gewichte der Fehlerterme im Laufe des Optimierungsprozesses die gegenwärtige Lösung, d.h. Ausrichtung der Abschnitte zueinander, stets im Fangbereich des globalen Minimums zu halten. Bspw. können die Gewichte dynamisch so gesteuert werden, dass zunächst eine grobe Ausrichtung der Abschnitte zueinander durch Minimierung des Fehlerterms des niedrigsten Detailgrades erfolgt. Im weiteren Optimierungsverlauf können die Fehlerterme des mittleren und hohen Detailgrades durch entsprechende Steuerung ihrer Gewichte hinzugenommen werden. Die Gewichte der Fehlerterme des Zielfunktionals können mithin veränderlich sein.

Im Laufe des Minimierens des Zielfunktionals kann das Gewicht des Fehlerterms des ersten (niedrigsten) Detailgrades verringert und das Gewicht des Fehlerterms des dritten (höchsten) Detailgrades erhöht werden. Das Gewicht des Fehlerterms des mittleren Detailgrades kann konstant bleiben. Alle Gewichte können zu Beginn des Optimierungsprozesses ungleich null sein. Es erfolgt mithin eine gleichzeitige Optimierung aller Detailgrade.

Das Verfahren kann auch vollständig iterativ erfolgen, d.h. ergibt sich für den Fehlerterm eines bestimmten Detailgrades keine nennenswerte Verbesserung des Zielfunktionals mehr, so wird der zu diesem Detailgrad zugehörige Fehlerterm bei der weiteren Minimierung nicht mehr berücksichtig und stattdessen der Fehlerterm des nächst höheren Detailgrades betrachtet. Auch dies erfolgt durch eine entsprechende Steuerung der Gewichte. So kann vorgesehen sein, dass zunächst das Gewicht des Fehlerterms des ersten Detailgrades ungleich null und die Gewichte der Fehlerterme des zweiten und dritten Detailgrades gleich null sind und das Minimieren des Zielfunktionals erfolgt bis die Abweichung zwischen den ersten Objekten und/oder Merkmalspunkten und den zweiten Objekten und/oder Merkmalspunkten einen Schwellwert unterschreitet oder eine erste Mindestanzahl an Iterationsschritten überschritten worden ist. Es kann des Weiteren vorgesehen sein, dass sodann das Gewicht des Fehlerterms des zweiten Detailgrades ungleich null und die Gewichte der ersten und dritten Detailgrades gleich null sind und das Minimieren des Zielfunktionals erfolgt bis die Abweichung zwischen den ersten Objekten und/oder Merkmalspunkten und den zweiten Objekten und/oder Merkmalspunkten einen Schwellwert unterschreitet oder eine zweite Mindestanzahl an Iterationsschritten überschritten worden ist. Es kann darüber hinaus vorgesehen sein, dass sodann das Gewicht des Fehlerterms des dritten Detailgrades ungleich null und die Gewichte der Fehlerterme des ersten und zweiten Detailgrades gleich null sind und das Minimieren des Zielfunktionals erfolgt bis die Abweichung zwischen den ersten Objekten und/oder Merkmalspunkten und den zweiten Objekten und/oder Merkmalspunkten einen Schwellwert unterschreitet oder eine zweite Mindestanzahl an Iterationsschritten überschritten worden ist.

Es ist auch möglich, zeitliche Aspekte bei der Minimierung zu beachten, d.h. die Zeitpunkte, zu welchen die einzelnen Abschnitte erzeugt wurden. Insbesondere die Merkmalspunkte (feature points) des höchsten Detailgrades können sich über die Zeit ändern. So sieht ein Baum im Sommer anders als im Winter, was zu verschiedenen Merkmalspunkten (feature points) führt. Ist der zeitliche Abstand zwischen zwei Abschnitten, die ausgerichtet werden sollen, klein, so werden die Merkmalspunkte des höchsten Detailgrades höher gewichtet. Ist der zeitliche Abstand zwischen zwei Abschnitten, die ausgerichtet werden sollen, groß, so werden die Objekte und/oder Merkmalspunkte niedrigerer Detailgrade höher gewichtet. Es kann mithin vorgesehen sein, dass zunächst eine zeitlichen Differenz zwischen einem ersten Zeitpunkt, an welchem der ersten Abschnitt erzeugt wurde, und einem zweiten Zeitpunkt, an welchem der zweite Abschnitt erzeugt wurde ermittelt wird. Das Gewicht des Fehlterms des ersten Detailgrades ist geringer als das Gewicht des Fehlerterms des dritten Detailgrades, wenn die zeitliche Differenz kleiner als ein erster zeitlicher Schwellwert ist. Das Gewicht des Fehlerterms des ersten Detailgrades ist höher als das Gewicht des Fehlerterms des dritten Detailgrades, wenn die zeitliche Differenz größer als ein zweiter zeitlicher Schwellwert ist.

Andererseits können auch ähnliche Zeitpunkte betrachtet werden, die zeitlich wiederum beliebig weit auseinander liegen können.

So können ähnliche Zeitpunkte, wie gleiche Tageszeit, gleiche Jahreszeit, dazu führen, dass die hochdetaillierten Objekte und/oder Merkmalspunkte ähnlicher sind, als zeitlich nur geringfügig auseinanderliegende unterschiedliche Zeitpunkte, wie Tages- und Nachtzeit. Daher kann vorgesehen sein, dass die hoch detaillierten Objekte und/oder Merkmalspunkte, mithin der Fehlerterm des höchsten Detailgrades, höher gewichtet werden, als die niedrig detaillierten Objekte und/oder Merkmalspunkte, mithin der Fehlerterm niedrigerer Detailgrade.

Ein Aspekt betrifft das optimalsteuergeführte Ausrichten der Abschnitte zueinander. Das Ausrichten der Abschnitte kann abhängig von dem Detailgrad erfolgen. Dies ist insbesondere dann relevant, wenn sich die Gewichte im Laufe des Optimierungsprozesses ändern, bspw. wenn dieser wie oben beschrieben iterativ erfolgt. Wird anfänglich lediglich der Fehlerterm des niedrigsten Detailgrades minimiert, so erfolgt das Ausrichten lediglich durch Translation und Rotation. Wird im Folgenden der Fehlerterm des mittleren Detailgrades minimiert, so erfolgt das Ausrichten ebenso lediglich durch Translation und Rotation. Wird hingegen im Weiteren der Fehlerterm des höchsten Detailgrades minimiert, so erfolgt das Ausrichten durch Translation und Rotation sowie zusätzlich durch Dehnung und Stauchung der Abschnitte, wobei die Dehnung bzw. Stauchung der Abschnitte linear über einen gesamten Abschnitt erfolgt. Es ist auch möglich, Dehnung und Stauchung bereits bei dem Fehlerterm des niedrigsten und/oder mittleren Detailgrades zu berücksichtigen.

Die Ausrichtung durch Translation und Rotation kann durch ein SLAM (Simultaneous Localization and Mapping, Simultane Lokalisierung und Kartenerstellung) - Verfahren erfolgen wie bspw. Extended Kalman Filter (EKF) SLAM, Sparse Extended Information Filter (SEIF) SLAM und Unscented Kalman Filter (UKF) SLAM. Die Distanz zwischen verschiedenen Merkmalspunkten in einem Abschnitt bleibt gleich.

Die Ausrichtung zusätzlich durch Dehnung oder Stauchung eines Abschnitts kann mit einem nicht starren ICP (Iterative Closest Point) Verfahren erfolgen. Es ist zudem möglich verschiedene Objekte/Merkmale aufeinander zu "warpen", wobei ein beliebiges Vektorfeld des ersten Abschnitts auf ein beliebiges Vektorfeld des zweiten Abschnitts abgebildet wird. Das ICP-Verfahren liefert hierzu die Korrespondenzen bezüglich der Objekte und/oder Merkmale vom ersten und zweiten Abschnitt. Diese Korrespondenzen definieren das Vektorfeld.

Ein weiterer Aspekt betrifft eine Backendeinrichtung gemäß Anspruch 11. Diese weist einen Speicher auf, welcher eingerichtet ist, einen ersten Abschnitt betreffende erste Daten mit zumindest durch ihre räumliche Position gekennzeichneten Objekten und/oder Merkmalspunkten, die in eine Vielzahl von Detailgraden klassifizierbar sind, bereitzustellen und einen zweiten Abschnitt betreffende zweite Daten mit zumindest durch ihre räumliche Position gekennzeichneten Objekten und/oder Merkmalspunkten, die in die Vielzahl von Detailgraden klassifizierbar sind, bereitzustellen. Der erste Abschnitt und der zweite Abschnitt überlappen sich zumindest teilweise. Die Backendeinrichtung weist darüber hinaus einen oder mehrere Prozessoren auf, welche eingerichtet sind, ein aus von unterschiedlichen Quellen stammenden Abschnitten zusammengesetztes digitales Modell zumindest eines Teilbereichs einer digitalen Karte zu erzeugen und/oder zu aktualisieren durch Ausrichten des ersten Abschnitts und des zweiten Abschnitts zueinander durch Minimieren eines Zielfunktionals, welches einen gewichteten Fehlerterm für jeden Detailgrad der Vielzahl von Detailgraden aufweist, wobei jeder Fehlerterm eine gewichtete Abweichung zwischen den Objekten und/oder Merkmalspunkten des ersten Abschnitts und den korrespondierenden Objekten und/oder Merkmalspunkten des zweiten Abschnitts beschreibt.

Ein weiterer Aspekt betrifft ein System zur Erzeugung und/oder Aktualisierung eines eines aus Abschnitten zusammengesetzten digitalen Modells zumindest eines Teilbereichs einer digitalen Karte, gemäß Anspruch 12. Das System weist eine Vielzahl von Fahrzeugen auf, welche eingerichtet sind, einen ersten Abschnitt betreffende Daten mit zumindest durch ihre räumliche Position gekennzeichneten Merkmalen, die in eine Vielzahl von Detailgraden klassifizierbar sind, aus einer Vielzahl von aufgezeichneten Bildern zu erzeugen und an eine Backendeinrichtung zu übermitteln. Das System weist darüber hinaus eine Backendeinrichtung auf. Die Backendeinrichtung hat eine Empfangseinrichtung, welche eingerichtet ist, einen ersten Abschnitt betreffende erste Daten mit zumindest durch ihre räumliche Position gekennzeichneten Objekten und/oder Merkmalspunkten, die in eine Vielzahl von Detailgraden klassifizierbar sind, von einem ersten Fahrzeug zu empfangen; und einen zweiten Abschnitt betreffende zweite Daten mit zumindest durch ihre räumliche Position gekennzeichneten Merkmalen, die in die Vielzahl von Detailgraden klassifizierbar sind, zu empfangen. Der erste Abschnitt und der zweite Abschnitt überlappen sich zumindest teilweise. Die Backendeinrichtung hat darüber hinaus einen oder mehrere Prozessoren, welche eingerichtet sind, ein aus von der Vielzahl von Fahrzeugen stammenden Abschnittei zusammengesetztes digitals Modell zumindest eines Teilbereichs einer digitalen Karte zu erzeugen und/oder zu aktualisieren durch Ausrichten des ersten Abschnitts und des zweiten Abschnitts zueinander durch Minimieren eines Zielfunktionals, welches einen gewichteten Fehlerterm für jeden Detailgrad der Vielzahl von Detailgraden aufweist, wobei jeder Fehlerterm eine gewichtete Abweichung zwischen den Objekten und/oder Merkmalspunkten des ersten Abschnitts und den korrespondierenden Objekten und/oder Merkmalspunkten des zweiten Abschnitts beschreibt.

### KURZFASSUNG DER FIGUREN

Die Erfindung wird im Folgenden an Hand von Ausführungsbeispielen mit Bezug auf Figuren beschrieben. Es zeigen
- Fig. 1: ein Blockschaltbild eines Systems ; und
- Fig. 2: ein Flussdiagramm des Verfahrens;

### DETAILLIERTE BESCHREIBUNG

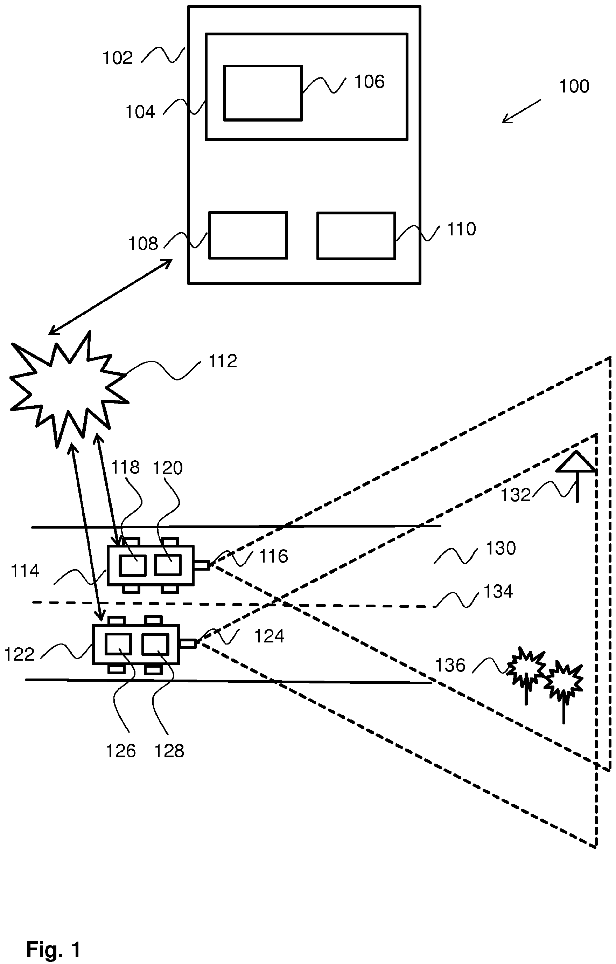

Fig. 1 zeigt ein Blockschaltbild eines Systems 100 zur Erzeugung und/oder Aktualisierung eines aus Abschnitten zusammengesetzten digitalen Modells zumindest eines Teilbereichs einer digitalen Karte. Das System beinhaltet eine Backendeinrichtung 102, ein Netzwerk 112 und zwei Fahrzeuge 114, 122. Die Fahrzeuge 114, 122 fahren entlang einer Straße 130 mit zwei Fahrbahnen, die durch die gestrichelte Fahrbahnmarkierung 134 getrennt sind. Das erste Fahrzeug 116 hat eine Kamera 116 zur Aufnahme von Umgebungsbildern in Fahrtrichtung, dargestellt durch den gestrichelten Kegel. Das erste Fahrzeug hat einen ersten Prozessor 120, in welchem aus den Umgebungsbildern ein erstes 2D/3D Teilmodell der Umgebung errechnet wird. Dieses 2D/3D Teilmodell stellt einen ca. 100 x 100 m großen Abschnitt eines digitalen Gesamtmodells der Umgebung bzw. eine digitale Karte dar. Im Blickfeld der Kamera befinden sich Umgebungspunkte wie ein Straßenschild 132, die Striche der Fahrbahnmarkierung 135, sowie eine Gruppe Bäume, die als Merkmalspunkte der Umgebung in dem 2D/3D Teilmodell abgebildet werden. Die Gruppe Bäume wird dabei durch einen visuellen Deskriptor modelliert. Die Umgebungspunkte lassen sich in verschiedene Detailgrade des digitalen Modells klassifizieren. Das Straßenschild 132 ist ein Objekt des niedrigsten Detailgrades, die Fahrbahnmarkierung 134 ist ein Objekte des mittleren Detailgrades und die Gruppe Bäume mit ihrer charakteristischen Baumkronensilhouette ist ein Objekt des höchsten Detailgrades. Das erste Fahrzeug 118 hat eine Sende- und Empfangseinrichtung 118 zur Übertragung des ersten 2D/3D Teilmodells über das Netzwerk 112 an eine Sende/Empfangseinrichtung 108 im Backend 102. Analog zum ersten Fahrzeug 114 hat auch das zweite Fahrzeug 122 eine Kamera 124 zur Aufnahme von Umgebungsbildern. Das zweite Fahrzeug 122 hat einen zweiten Prozessor 128, in welchem aus den Umgebungsbildern ein zweites 2D/3D Teilmodell der Umgebung errechnet wird. Das zweite Fahrzeug 118 hat eine Sende- und Empfangseinrichtung 122 zur Übertragung des zweiten 2D/3D Teilmodells über das Netzwerk 112 an die Sende/Empfangseinrichtung 108 im Backend 102.

Im Backend 102 werden das erste und das zweite 2D/3D Teilmodell, d.h. der erste und zweite Abschnitt des zusammengesetzten digitalen Modells im Speicher 104 abgelegt. Im Speicher 104 befindet sich ein Softwaremodul mit Instruktionen, die wenn sie vom Prozessor 110 ausgeführt werden, ein Verfahren zur Erzeugung und/oder Aktualisierung eines aus von den Fahrzeugen stammenden Abschnitten zusammengesetzten digitalen Modells zumindest eines Teilbereichs einer digitalen Karte implementieren.

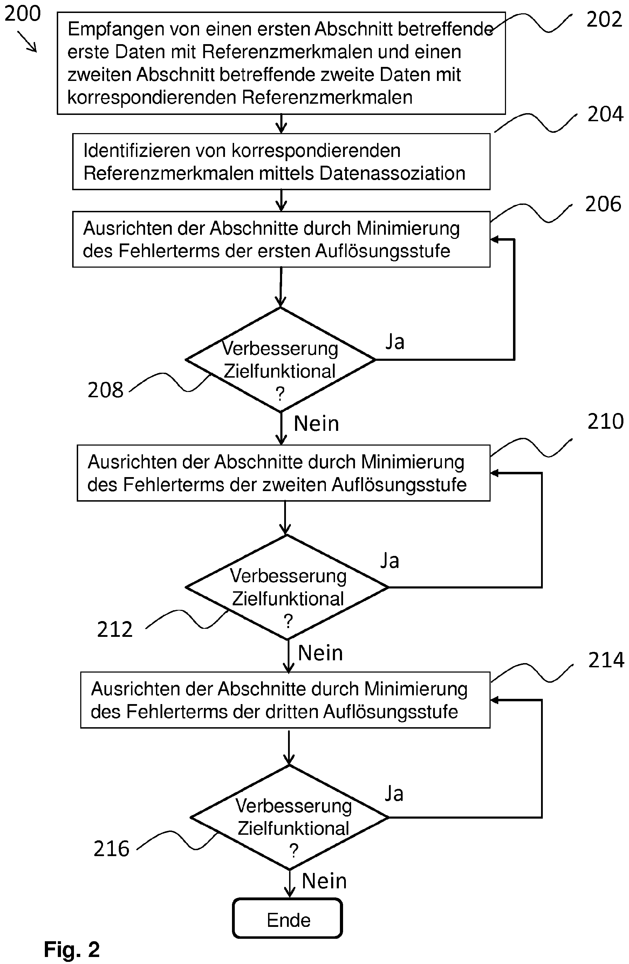

Eine Ausführungsform des Verfahrens wird in Zusammenhang mit Fig. 2 beschrieben. In einem ersten Schritt 202 werden die den ersten Abschnitt betreffende erste Daten mit Referenzmerkmalen, insbesondere das Verkehrsschild 132, die Striche der Fahrbahnmarkierung 134 und den visuellen Deskriptor für die Baumgruppe 136 empfangen und in dem Speicher 104 bereitgestellt. Darüber hinaus werden in dem ersten Schritt 202 die den zweiten Abschnitt betreffende Daten mit den korrespondierenden Referenzmerkmalen, insbesondere das Verkehrsschild 132, die Striche der Fahrbahnmarkierung 134 und den visuellen Deskriptor für die Baumgruppe 136 empfangen und in dem Speicher 104 bereitgestellt. In einem zweiten Schritt 204 werden hinsichtlich der Merkmale des ersten und des zweiten Abschnitts Korrespondenzen identifiziert mit einem geeigneten Datenassoziationsverfahren. Sind korrespondierende Merkmale gefunden, so wird der erste und zweite Abschnitt zueinander ausgerichtet durch Minimierung eines Zielfunktionals, welches die Abweichung zwischen den korrespondierenden Merkmalen für jeden Detailgrad beschreibt. Die Minimierung ist hier iterativ ausgestaltet, mithin wird für jeden Detailgrad ein entsprechender Fehlerterm (Abweichungsterm) einzeln und sukzessive minimiert, wobei mit der ersten (niedrigsten) Auflösungsstufe in Schritt 206 begonnen wird. Der Fehlerterm beinhaltet nur die Abweichung zwischen dem Verkehrsschild 132 im ersten Abschnitt und dem Verkehrsschild 132 im zweiten Abschnitt. In Schritt 208 wird überprüft, ob sich eine weitere Verbesserung des Zielfunktionals ergibt, bspw. durch Vergleich des Wertes des Zielfunktionals des gegenwärtigen Iterationsschrittes mit dem Wert des Zielfunktionals des vorhergehenden Iterationsschrittes. Ist dies der Fall, so wird weiterhin der Fehlerterm für den erste Detailgrad durch Ausrichten der Abschnitte zueinander minimiert. Ist dies nicht der Fall, so wird die Minimierung des Zielfunktionals in Schritt 210 mit der Minimierung des Fehlerterms des zweiten (mittleren) Detailgrades fortgesetzt. Der Fehlerterm beinhaltet lediglich die Abweichung zwischen den Strichen der Fahrbahnmarkierung 134 des ersten Abschnitts und den Strichen der Fahrbahnmarkierung 134 des zweiten Abschnitts. In Schritt 212 wird überprüft, ob sich eine weitere Verbesserung des Zielfunktionals ergibt, bspw. durch Vergleich des Wertes des Zielfunktionals des gegenwärtigen Iterationsschrittes mit dem Wert des Zielfunktionals des vorhergehenden Iterationsschrittes. Ist dies der Fall, so wird weiterhin der Fehlerterm für den zweiten Detailgrad durch Ausrichten der Abschnitte zueinander minimiert. Ist dies nicht der Fall, so wird die Minimierung des Zielfunktionals in Schritt 216 mit der Minimierung des Fehlerterms des dritten (höchsten) Detailgrades fortgesetzt. Der Fehlerterm beinhaltet lediglich die Abweichung zwischen den visuellen Deskriptoren für die Baumgruppe 136 des ersten Abschnitts und den visuellen Deskriptoren für die Baumgruppe 136 des zweiten Abschnitts.. In Schritt 216 wird überprüft, ob sich eine weitere Verbesserung des Zielfunktionals ergibt, bspw. durch Vergleich des Wertes des Zielfunktionals des gegenwärtigen Iterationsschrittes mit dem Wert des Zielfunktionals des vorhergehenden Iterationsschrittes. Ist dies der Fall, so wird weiterhin der Fehlerterm für den dritten Detailgrad durch Ausrichten der Abschnitte zueinander minimiert. Ist dies nicht der Fall, so terminiert das Verfahren. Das Ausrichten durch Minimierung der Fehlerterme des ersten und zweiten Detailgrades erfolgt durch Translation und Rotation der Abschnitte. Das Ausrichten durch Minimierung des Fehlerterms des dritten Detailgrades erfolgt zusätzlich durch Dehnung und Stauchung der Abschnitte.

In der Regel treten Merkmale des höchsten Detailgrades relativ häufig auf, so dass viele Korrespondenzen gefunden werden können. Die Ausrichtung anhand der Merkmale des zweiten Detailgrades kann zuverlässig erfolgen, da die Striche der Fahrbahnmarkierung oftmals klar sichtbar sind. Die Ausrichtung anhand der Merkmale des niedrigsten Detailgrades hat den Vorteil, dass in einem 3D Netz diese als Vertices darstellbar sind. Ein derartiges Netz kann immer trianguliert werden, bspw. mittels Deleauny Triangulation. Die Abschnitte können mittels ICP während einer 3D Rekonstruktion zueinander ausgerichtet werden.

Durch die iterative Minimierung in unterschiedlichen Detailgraden wird das globale Minimum der Abweichung zwischen den korrespondierenden Merkmalen des ersten und des zweiten Abschnitts erreicht.

## Patentansprüche

1. Verfahren zur Erzeugung und/oder Aktualisierung eines aus von unterschiedlichen Quellen stammenden Abschnitten zusammengesetzten digitalen Modells zumindest eines Teilbereichs einer digitalen Karte, das Verfahren aufweisend:
Bereitstellen von einen ersten Abschnitt betreffenden ersten Daten mit zumindest durch ihre räumliche Position gekennzeichneten Objekten und/oder Merkmalspunkten, die in eine Vielzahl von Detailgraden klassifizierbar sind;
Bereitstellen von einen zweiten Abschnitt betreffenden zweiten Daten mit zumindest durch ihre räumliche Position gekennzeichneten Objekten oder Merkmalspunkten, die in die Vielzahl von Detailgraden klassifizierbar sind;
wobei sich der erste Abschnitt und der zweite Abschnitt zumindest teilweise überlappen; und, in einem oder mehreren Prozessoren,
Ausrichten des ersten Abschnitts und des zweiten Abschnitts zueinander durch Minimieren eines Zielfunktionals, welches einen gewichteten Fehlerterm für jeden Detailgrad der Vielzahl von Detailgraden aufweist, wobei jeder Fehlerterm eine gewichtete Abweichung zwischen den Objekten und/oder Merkmalspunkten des ersten Abschnitts und den korrespondierenden Objekten und/oder Merkmalspunkten des zweiten Abschnitts beschreibt.

2. Verfahren nach Anspruch 1, wobei die Objekte und/oder Merkmalspunkte eines ersten Detailgrades der Vielzahl von Detailgraden eine Straßenausstattung, insbesondere Verkehrsschilder (132) und Straßenlaternen, umfassen.

3. Verfahren nach einem der Ansprüche 1 bis 2, wobei die Objekte und/oder Merkmalspunkte eines zweiten Detailgrades der Vielzahl von Detailgraden Striche von Straßenmarkierungen (134) umfassen.

4. Verfahren nach einem der Ansprüche 1 bis 3, wobei die Objekte und/oder Merkmalspunkte eines dritten Detailgrades der Vielzahl von Detailgraden 2D/3D Merkmalspunkte, die durch ihre Position und einen visuellen Deskriptor beschreibbar sind, umfassen.

5. Verfahren nach einem der Ansprüche 1 bis 4, wobei die Gewichte der Fehlerterme des Zielfunktionals im Laufe des Minimierens des Zielfunktionals veränderlich sind.

6. Verfahren nach den Ansprüchen 2, 4 und 5, wobei im Laufe des Minimierens das Gewicht des Fehlerterms des ersten Detailgrades verringert wird und das Gewicht des Fehlerterms des dritten Detailgrades erhöht wird.

7. Verfahren nach den Ansprüchen 2-5, wobei zunächst das Gewicht des Fehlerterms des ersten Detailgrades ungleich null und die Gewichte der Fehlerterme des zweiten und dritten Detailgrades gleich null sind und das Minimieren des Zielfunktionals erfolgt bis die Abweichung zwischen den ersten Objekten und/oder Merkmalspunkten und den zweiten Objekten und/oder Merkmalspunkten einen Schwellwert unterschreitet oder eine erste Mindestanzahl an Iterationsschritten überschritten worden ist,
sodann das Gewicht des Fehlerterms des zweiten Detailgrades ungleich null und die Gewichte der Fehlerterme des ersten und dritten Detailgrades gleich null sind und das Minimieren des Zielfunktionals erfolgt bis die Abweichung zwischen den ersten Objekten und/oder Merkmalspunkten und den zweiten Objekten/und oder Merkmalspunkten einen Schwellwert unterschreitet oder eine zweite Mindestanzahl an Iterationsschritten überschritten worden ist, und
sodann das Gewicht des Fehlterms des dritten Detailgrades ungleich null und die Gewichte der Fehlerterme des ersten und zweiten Detailgrades gleich null sind und das Minimieren des Zielfunktionals erfolgt bis die Abweichung zwischen den ersten Objekten und/oder Merkmalspunkten und den zweiten Objekten und/oder Merkmalspunkten einen Schwellwert unterschreitet oder eine dritte Mindestanzahl an Iterationsschritten überschritten worden ist.

8. Verfahren nach den Ansprüchen 2 und 4, ferner aufweisend:
Ermitteln einer zeitlichen Differenz zwischen einem ersten Zeitpunkt, an welchem der ersten Abschnitt erzeugt wurde, und einem zweiten Zeitpunkt, an welchem der zweite Abschnitt erzeugt wurde;
wobei das Gewicht des Fehlerterms des ersten Detailgrades geringer ist als das Gewicht des Fehlerterms des dritten Detailgrades, wenn die zeitliche Differenz kleiner als ein erster zeitlicher Schwellwert ist; und/oder
wobei das Gewicht des Fehlerterms des ersten Detailgrades höher ist als das Gewicht des Fehlerterms des dritten Detailgrades, wenn die zeitliche Differenz größer als ein zweiter zeitlicher Schwellwert ist.

9. Verfahren nach einem der Ansprüche 1 bis 8, wobei das Ausrichten des ersten Abschnitts und des zweiten Abschnitts abhängig von dem Detailgrad erfolgt.

10. Verfahren nach Anspruch 9 und einem der Ansprüche 2-4, wobei das Ausrichten für den ersten und/oder zweiten Detailgrad und/oder dritten Detailgrad durch Translation, Rotation und/oder Dehnung, Stauchung, Warping erfolgt, wobei die Dehnung oder Stauchung linear über einen gesamten Abschnitt erfolgt.

11. Backendeinrichtung aufweisend:
einen Speicher, welcher eingerichtet ist, einen ersten Abschnitt betreffende erste Daten mit zumindest durch ihre räumliche Position gekennzeichneten Merkmalen, die in eine Vielzahl von Detailgraden klassifizierbar sind, bereitzustellen; und
einen zweiten Abschnitt betreffende zweite Daten mit zumindest durch ihre räumliche Position gekennzeichneten Objekten und/oder Merkmalspunkten, die in die Vielzahl von Detailgraden klassifizierbar sind, bereitzustellen;
wobei sich der erste Abschnitt und der zweite Abschnitt zumindest teilweise überlappen;
einen oder mehrere Prozessoren, welcher eingerichtet ist, beziehungsweise welche eingerichtet sind, ein aus von unterschiedlichen Quellen stammenden Abschnitten zusammengesetztes digitales Modell zumindest eines Teilbereichs einer digitalen Karte zu erzeugen und/oder zu aktualisieren durch Ausrichten des ersten Abschnitts und des zweiten Abschnitts zueinander durch Minimieren eines Zielfunktionals, welches einen gewichteten Fehlerterm für jeden Detailgrad der Vielzahl von Detailgraden aufweist, wobei jeder Fehlerterm eine gewichtete Abweichung zwischen den Objekten und/oder Merkmalspunkten des ersten Abschnitts und den korrespondierenden Objekten und/oder Merkmalspunkten des zweiten Abschnitts beschreibt.

12. System (100) zur Erzeugung und/oder Aktualisierung eines aus Abschnitten zusammengesetzten digitalen Modells zumindest eines Teilbereichs einer digitalen Karte, das System aufweisend:
eine Vielzahl von Fahrzeugen (114, 122), welche eingerichtet sind, einen Abschnitt betreffende Daten mit zumindest durch ihre räumliche Position gekennzeichneten Objekten und/oder Merkmalspunkten, die in eine Vielzahl von Detailgraden klassifizierbar sind, aus einer Vielzahl von aufgezeichneten Bildern zu erzeugen und an eine Backendeinrichtung (102) zu übermitteln;
eine Backendeinrichtung (102) aufweisend:
eine Empfangseinrichtung (108), welche eingerichtet ist, einen ersten Abschnitt betreffende erste Daten mit zumindest durch ihre räumliche Position gekennzeichneten Objekten und/oder Merkmalspunkten, die in eine Vielzahl von Detailgraden klassifizierbar sind, von einem ersten Fahrzeug zu empfangen; und
einen zweiten Abschnitt betreffende zweite Daten mit zumindest durch ihre räumliche Position gekennzeichneten Objekten und/oder Merkmalspunkten, die in die Vielzahl von Detailgraden klassifizierbar sind, zu empfangen;
wobei sich der erste Abschnitt und der zweite Abschnitt zumindest teilweise überlappen;
und einen Prozessor (110), welcher eingerichtet ist, ein aus von der Vielzahl von Fahrzeugen stammenden Abschnitten zusammengesetztes digitales Modell zumindest eines Teilbereichs einer digitalen Karte zu erzeugen und/oder zu aktualisieren durch Ausrichten des ersten Abschnitts und des zweiten Abschnitts zueinander durch Minimieren eines Zielfunktionals, welches einen gewichteten Fehlerterm für jeden Detailgrad der Vielzahl von Detailgraden aufweist, wobei jeder Fehlerterm eine gewichtete Abweichung zwischen den Objekten und/oder Merkmalspunkten des ersten Abschnitts und den korrespondierenden Objekten und/oder Merkmalspunkten des zweiten Abschnitts beschreibt.

## Claims

1. Method for generating and/or updating a digital model of at least one sub-region of a digital map, said digital model being assembled from sections originating from different sources, said method comprising:
providing first data relating to a first section and comprising objects and/or feature points characterized at least by their spatial position, said objects and/or feature points being classifiable into a plurality of degrees of detail;
providing second data relating to a second section and comprising objects or feature points characterized at least by their spatial position, said objects or feature points being classifiable into the plurality of degrees of detail;
wherein the first section and the second section at least partly overlap; and in one or more processors, aligning the first section and the second section relative to each other by minimizing a target functional, which has a weighted error term for each degree of detail of the plurality of degrees of detail, wherein each error term describes a weighted deviation between the objects and/or feature points of the first section and the corresponding objects and/or feature points of the second section.

2. Method according to Claim 1, wherein the objects and/or feature points of a first degree of detail of the plurality of degrees of detail comprise road fittings, in particular, road signs (132) and street lights.

3. Method according to either of Claims 1 to 2, wherein the objects and/or feature points of a second degree of detail of the plurality of degrees of detail comprise lines of road markings (134).

4. Method according to any one of Claims 1 to 3, wherein the objects and/or feature points of a third degree of detail of the plurality of degrees of detail comprise 2D/3D feature points that can be described by virtue of their position and a visual descriptor.

5. Method according to any one of Claims 1 to 4, wherein the weights of the error terms of the target functional are variable over the course of the minimization of the target functional.

6. Method according to Claims 2, 4 and 5, wherein over the course of the minimization the weight of the error term of the first degree of detail is reduced and the weight of the error term of the third degree of detail is increased.

7. Method according to Claims 2-5, wherein
firstly the weight of the error term of the first degree of detail is non-zero and the weights of the error terms of the second and third degree of detail are equal to zero and the minimization of the target functional is carried out until the deviation between the first objects and/or feature points and the second objects and/or feature points falls below a threshold value or else a first minimum number of iteration steps has been exceeded,
then the weight of the error term of the second degree of detail is non-zero and the weights of the error terms of the first and third degree of detail are equal to zero and the minimization of the target functional is carried out until the deviation between the first objects and/or feature points and the second objects and/or feature points falls below a threshold value or else a second minimum number of iteration steps has been exceeded, and
then the weight of the error term of the third degree of detail is non-zero and the weights of the error terms of the first and second degree of detail are equal to zero and the minimization of the target functional is carried out until the deviation between the first objects and/or feature points and the second objects and/or feature points falls below a threshold value or else a third minimum number of iteration steps has been exceeded.

8. Method according to Claims 2 and 4, also comprising:
determining a time difference between a first time point at which the first section was created, and a second time point at which the second section was created;
wherein the weight of the error term of the first degree of detail is lower than the weight of the error term of the third degree of detail if the time difference is less than a first time threshold; and/or
wherein the weight of the error term of the first degree of detail is higher than the weight of the error term of the third degree of detail if the time difference is greater than a second time threshold.

9. Method according to any one of Claims 1 to 8, wherein the alignment of the first section and the second section is carried out depending on the degree of detail.

10. Method according to Claim 9 and any one of Claims 2-4, wherein the alignment for the first and/or second degree of detail and/or third degree of detail is carried out by translation, rotation and/or elongation, compression, warping, wherein the elongation or compression is carried out linearly over an entire section.

11. Backend device having:
a memory which is configured for
providing first data relating to a first section and comprising features characterized at least by their spatial position, said features being classifiable into a plurality of degrees of detail; and
providing second data relating to a second section and comprising objects and/or feature points characterized at least by their spatial position, said objects and/or feature points being classifiable into the plurality of degrees of detail;
wherein the first section and the second section at least partly overlap;
one or more processors which is/are configured for generating and/or updating a digital model of at least one sub-region of a digital map, said digital model being assembled from sections originating from different sources, by
aligning the first section and the second section relative to each other by minimizing a target functional, which has a weighted error term for each degree of detail of the plurality of degrees of detail, wherein each error term describes a weighted deviation between the objects and/or feature points of the first section and the corresponding objects and/or feature points of the second section.

12. System (100) for generating and/or updating a digital model of at least one sub-region of a digital map, said digital model being assembled from sections, said system comprising:
a plurality of vehicles (114, 122) which are configured for generating data relating to a section and comprising objects and/or feature points characterized at least by their spatial position, said objects and/or feature points being classifiable into a plurality of degrees of detail, from a plurality of recorded images and for transferring said data to a backend device (102);
a backend device (102) having:
a receiving device (108) which is configured for receiving from a first vehicle first data relating to a first section and comprising objects and/or feature points characterized at least by their spatial position, said objects and/or feature points being classifiable into a plurality of degrees of detail; and
receiving second data relating to a second section and comprising objects and/or feature points characterized at least by their spatial position, said objects and/or feature points being classifiable into the plurality of degrees of detail;
wherein the first section and the second section at least partly overlap;
and a processor (110) which is configured for generating and/or updating a digital model of at least one sub-region of a digital map, said digital model being assembled from sections originating from the plurality of vehicles, by
aligning the first section and the second section relative to each other by minimizing a target functional, which has a weighted error term for each degree of detail of the plurality of degrees of detail, wherein each error term describes a weighted deviation between the objects and/or feature points of the first section and the corresponding objects and/or feature points of the second section.

## Revendications

1. Procédé de génération et/ou d'actualisation d'un modèle numérique d'au moins une sous-zone d'une carte numérique qui est composé de portions provenant de différentes sources, le procédé comprenant les étapes suivantes :
fournir des premières données relatives à une première portion et comportant des objets et/ou des points caractéristiques qui sont caractérisés au moins par leur position spatiale et qui peuvent être classés en une multitude de niveaux de détail ;
fournir des deuxièmes données relatives à une deuxième portion et comportant des objets ou des points caractéristiques qui sont caractérisés au moins par leur position spatiale et qui peuvent être classés en une multitude de niveaux de détail ;
la première portion et la deuxième portion se chevauchant au moins partiellement ; et, dans un ou plusieurs processeurs,
orienter la première portion et la deuxième portion l'une par rapport à l'autre avec minimisation d'une fonctionnelle cible qui a un terme d'erreur pondéré pour chaque niveau de détail de la multitude de niveaux de détail, chaque terme d'erreur décrivant un écart pondéré entre les objets et/ou points caractéristiques de la première portion et les objets et/ou points caractéristiques correspondants de la deuxième portion.

2. Procédé selon la revendication 1, les objets et/ou points caractéristiques d'un premier niveau de détail de la multitude de niveaux de détail comprenant des équipements routiers, en particulier des panneaux de signalisation (132) et des lampadaires.

3. Procédé selon l'une des revendications 1 et 2, les objets et/ou points caractéristiques d'un deuxième niveau de détail de la multitude de niveaux de détail comprenant des lignes de marquage au sol (134).

4. Procédé selon l'une des revendications 1 à 3, les objets et/ou points caractéristiques d'un troisième niveau de détail de la multitude de niveaux de détail comprenant des points caractéristiques 2D/3D qui peuvent être décrits par leur position et par un descripteur visuel.

5. Procédé selon l'une des revendications 1 à 4, les poids des termes d'erreur de la fonctionnelle cible étant variables au cours de la minimisation de la fonctionnelle cible.

6. Procédé selon les revendications 2, 4 et 5, le poids du terme d'erreur du premier niveau de détail étant réduit, et le poids du terme d'erreur du troisième niveau de détail étant augmenté, au cours de la minimisation.

7. Procédé selon les revendications 2 à 5, initialement le poids du terme d'erreur du premier niveau de détail n'étant pas égal à zéro et les poids des termes d'erreur du deuxième et du troisième niveau de détail étant égaux à zéro et la fonctionnelle cible étant minimisée jusqu'à ce que l'écart entre les premiers objets et/ou points caractéristiques et les deuxièmes objets et/ou points caractéristiques devienne inférieur à une valeur de seuil ou qu'un premier nombre minimal d'étapes d'itération ait été dépassé,
puis le poids du terme d'erreur du deuxième niveau de détail n'étant pas égal à zéro et les poids des termes d'erreur du premier et du troisième niveau de détail étant égaux à zéro et la fonction cible étant minimisée jusqu'à ce que l'écart entre les premiers objets et/ou points caractéristiques et les deuxièmes objets et/ou points caractéristiques devienne inférieur à une valeur de seuil ou qu'un deuxième nombre minimal d'étapes d'itération ait été dépassé,
puis le poids du terme d'erreur du troisième niveau de détail étant non égal à zéro et les poids des termes d'erreur des premier et deuxième niveaux de détail étant égaux à zéro et la fonctionnelle cible étant minimisée jusqu'à ce que l'écart entre les premiers objets et/ou points caractéristiques et les deuxièmes objets et/ou points caractéristiques devienne inférieur à une valeur de seuil ou qu'un troisième nombre minimal d'étapes d'itération ait été dépassé.

8. Procédé selon les revendications 2 et 4, comprenant en outre les étapes suivantes :
déterminer une différence de temps entre un premier instant auquel la première portion a été générée et un deuxième instant auquel la deuxième portion a été générée ;
le poids du terme d'erreur du premier niveau de détail étant inférieur au poids du terme d'erreur du troisième niveau de détail si la différence de temps est inférieure à une première valeur de seuil de temps ; et/ou
le poids du terme d'erreur du premier niveau de détail étant supérieur au poids du terme d'erreur du troisième niveau de détail si la différence de temps est supérieure à une deuxième valeur de seuil de temps.

9. Procédé selon l'une des revendications 1 à 8, l'orientation de la première portion et de la deuxième portion étant effectuée en fonction du niveau de détail.

10. Procédé selon la revendication 9 et l'une des revendications 2 à 4, l'orientation pour le premier et/ou le deuxième niveau de détail et/ou le troisième niveau de détail étant effectuée par translation, rotation et/ou expansion, compression, gauchissement, l'expansion ou la compression étant effectuée linéairement sur toute une portion.

11. Dispositif dorsal comprenant :
une mémoire qui est adaptée pour fournir des premières données relatives à une première portion et comportant des caractéristiques qui sont caractérisées au moins par leur position spatiale et qui peuvent être classées en une multitude de niveaux de détail ; et pour fournir des deuxièmes données relatives à une deuxième portion et comportant des objets et/ou points caractéristiques qui sont caractérisés au moins par leur position spatiale et qui peuvent être classés dans la multitude de niveaux de détail ;
la première portion et la deuxième portion se chevauchant au moins partiellement ;
un ou plusieurs processeurs qui sont adaptés pour générer et/ou actualiser un modèle numérique d'au moins une sous-zone d'une carte numérique qui est composé de portions provenant de différentes sources, en orientant la première portion et la deuxième portion l'une par rapport l'autre en minimisant une fonctionnelle cible qui comporte un terme d'erreur pondéré pour chaque niveau de détail de la multitude de niveaux de détail, chaque terme d'erreur décrivant un écart pondéré entre les objets et/ou points caractéristiques de la première portion et les objets et/ou points caractéristiques correspondants de la deuxième portion.

12. Système (100) de génération et/ou d'actualisation d'un modèle numérique d'au moins une sous-zone d'une carte numérique qui est composé de portions, le système comprenant :
une multitude de véhicules (114, 122) qui sont adaptés pour générer des données, relatives à une portion et comportant des objets et/ou points caractéristiques qui sont caractérisés au moins par leur position spatiale et qui peuvent être classés en une multitude de niveaux de détail, à partir d'une multitude d'images enregistrées et pour les transmettre à un dispositif dorsal (102) ;
un dispositif dorsal (102) comprenant :
un dispositif de réception (108) qui est adapté pour recevoir d'un premier véhicule des premières données relatives à une première portion et comportant des objets et/ou points caractéristiques qui sont caractérisés au moins par leur position spatiale et qui peuvent être classés en une multitude de niveaux de détail ; et pour recevoir des deuxièmes données relatives à une deuxième portion et comportant des objets et/ou points caractéristiques qui sont caractérisés au moins par leur position spatiale et qui peuvent être classés dans la multitude de niveaux de détail ;
la première portion et la deuxième portion se chevauchant au moins partiellement ;
et un processeur (110) qui est adapté pour générer et/ou actualiser un modèle numérique d'au moins une sous-zone d'une carte numérique qui est composé de portions provenant de la multitude de véhicule, en orientant la première portion et la deuxième portion l'une par rapport l'autre en minimisant une fonctionnelle cible qui comporte un terme d'erreur pondéré pour chaque niveau de détail de la multitude de niveaux de détail, chaque terme d'erreur décrivant un écart pondéré entre les objets et/ou points caractéristiques de la première portion et les objets et/ou points caractéristiques correspondants de la deuxième portion.
